# EUROPEAN PATENT SPECIFICATION

(11) **EP 1 916 150 B1**
(45) Date of publication and mention of the grant of the patent: **30.12.2009**
(21) Application number: 07118995.5
(22) Date of filing: 22.10.2007
(51) Int. Cl.: B60P 3/22

(54) **Suction arm**
Saugarm
Bras d'aspiration

(30) Priority: 23.10.2006 DK 200601368
(43) Date of publication of application: 30.04.2008
(73) Proprietor: Sørensen, Harry Højvang, 6818 Årre (DK)
(72) Inventor: Sørensen, Harry Højvang, 6818 Årre (DK)
(74) Representative: Holme Patent A/S

(56) References cited:
- EP-A- 0 418 581
- DE-A1- 4 014 843
- DE-U1- 20 008 879

## Description

The present invention relates to a suction arm for pumping a fluid from a reservoir to a fluid container and of the kind comprising a number of pipes connected in series via articulations, a suction head and means for pivoting the pipes in relation to each other, where a first pipe is connected to the fluid container via a first articulation, a second pipe is connected to the first pipe via a second articulation and a third pipe is connected to the second pipe via a third articulation.

Such suction arms conventionally comprise a number of valves, which are opened and closed in dependency of whether the fluid container is to be emptied or filled, and they are typically used to move particulate materials, fluids or gas, which is accumulated in a temporary reservoir, from the reservoir to a mobile fluid container or a reservoir, which is located elsewhere. Suction arms are conventionally used on e.g. slurry tankers for sucking liquid manure from a manure tank to a slurry tanker, for sucking oil from a tanker to a road tanker, or for sucking sand and rubble from excavations to the floor of a lorry. Such fluids are very heavy and must be pumped under pressure through the suction arm. The weight of the fluid and the feed pressure make high demands for the articulations of the suction arm, which must be of such a kind that they can retain the pipes in the desired position, such that the suction head is not dislocated during operation. Such a dislocation can unintentionally result in the fluid container tilting, the articulation breaking and the suction head hitting the reservoir wall and being damaged.

For a suction arm on a mobile fluid container, which is to serve various reservoirs in various places, demands are high for flexible adjustment of the suction arm. It must be possible to displace the suction arm above reservoirs with different heights, widths, depths and shapes, such that the suction head can be immersed in the fluid in order to empty the reservoir and suck the fluid to the fluid container. An example is shown in EP 0 418 581 and presents the preamble of claim 1. Thus, the range and adjusting level of the suction arm is crucial to the suction arm working stably and effectively, which results in that most often is used a flexible suction arm in the form of a long hose, which after usage is rolled on a barrel. During the rolling, residual fluid is spraying and squirting from the free end of the suction hose and over the fluid container and its surroundings. This contamination smells and is brought along to the next reservoir to be emptied.

Alternatively is used a suction arm consisting of articulated, rigid lengths of pipes of a material, which contrary to the suction hose, can carry both the weight of the suction arm and the fluid. A suction arm of rigid lengths of pipes has sufficient rigidity to easily displace the suction head to the desired position above the reservoir, which is to be emptied, and must not be rolled at the end of usage. Such a suction arm is especially preferred when e.g. liquid manure is sucked from a manure tank to a slurry tanker.

However, all known suction arms have the disadvantage that the suction end of the suction arm is dripping after termination of usage. If the fluid container is of the mobile type, this could result in a larger or smaller amount of fluid is unintentionally spread on the roadway during transport. If the fluid container is of the stationary type, there is a risk that the dripping fluid gradually seeps down into the ground water and contaminates this.

In order to remedy the above mentioned drawbacks, in a first aspect according to the present invention is provided a suction arm of the kind mentioned in the opening paragraph which reduces the risk of waste and spillage of fluid when preparing the suction arm, during use of the suction arm and after use of the suction arm.

In a second aspect according to the present invention a suction arm is provided of the kind mentioned in the opening paragraph, which reduces the need for individual, stationary pumping stations at each reservoir.

In a third aspect according to the present invention is provided a suction arm of the kind mentioned in the opening paragraph which can be interchanged, such that the suction arm can be utilized to suck from a reservoir, which is placed on one side or the other of the fluid container, respectively.

In a fourth aspect according to the present invention is provided a suction arm of the kind mentioned in the opening paragraph which can be mounted on a mobile fluid container.

The novel and unique whereby this is achieved according to the invention consists in that the suction arm comprises a fourth pipe, which at a free end opens into the suction head, and at the opposite end is pivotally connected to the third pipe via a fourth articulation, to at least a position in which the suction head is in a suction position where the suction head is immersed in the fluid, and a position of rest where the suction head is pivoted to a height level, which is higher than the height level of the fourth articulation.

By adding a fourth pipe to the suction arm, its length, flexibility and adjustment degree is advantageously increased, such that the suction head quickly and easily can be positioned at a height level, which is higher than the height level of the fourth articulation, thus to the highest possible extent preventing unintended and unwanted spillage of fluid, e.g. when the suction head is pulled up from the fluid, or when the fluid is possibly subsequently transported in a mobile fluid container.

When the suction head on the fourth pipe is pivoted to the position above the height level of the fourth articulation, and the third articulation is also at a height level above the height level of the fourth articulation, the third and fourth pipe will operate equivalent to a gully trap. When the third articulation is at a height level below the fourth articulation, the fluid will merely flow further into the suction arm and still not cause spillage. With the suction arm according to the present invention a large working width and high level of adjustment flexibility is obtained, concurrently with waste and loss of fluid sucked by the suction arm to a far larger extent than previously known can be avoided or completely prevented.

In an especially advantageous embodiment of a suction arm according to the present invention the fourth pipe can be pivotable between the suction position and the position of rest at an angle of at least ± 180°.

The fourth pipe gives the suction arm an advantageous additional length and larger flexibility, when the suction head is to be lead into or down into the reservoir. In addition, the fourth pipe does not occupy inexpedient space because it can be pivoted at an angle of at least 180°.

In an embodiment of a suction arm according to the invention, which is especially appropriate for mobile fluid containers, the fluid is prevented from unintentionally flowing out of the fluid container, when the suction head, by means of the fourth pipe and the fourth articulation, is pivoted to a height level, which is higher than the height level of the fourth articulation, until the fourth pipe reaches a position principally parallel to the third pipe with the suction head facing substantially perpendicularly to the fluid level in the fluid container.

The two parallel pipes and the highly placed suction head constitute an additional safety precaution against spillage, if one or more of the valves, that are inserted in the suction arm in order to open and close the fluid flow, suddenly fail. Thus, the suction head of the suction arm can advantageously be arranged above the fluid level in the slurry tanker regardless whether the valves of the suction arm are functional or not, or the suction arm has no valves at all.

Optionally, at least the fourth articulation itself or a length of the fourth pipe, which adjoins the fourth articulation, is provided with an independent outlet for draining off fluid, which might be accumulated in the fourth articulation and the adjoining length of the fourth pipe, thus not leaving any residual fluid in the suction arm. This outlet can furthermore be used as flush nozzle when mixing the liquid manure.

The suction arm can in a preferred embodiment according to the present invention be arranged such that at least the fourth pipe has an adjustable length. Hereby, the advantage is obtained that the working width of the suction arm and the suction head can be adjusted in order to aspirate reservoirs with various depths, such that even a deep reservoir, such as e.g. a manure tank, easily and quickly can be emptied. As more very large farms are being established, the need for large and deep manure tanks grows, and depths of more than 6 meters, whereof half can be below ground, are even more common. When the conventional suction arms, as stated in the opening paragraph, are fitted on a mobile fluid container, e.g. a slurry tanker, the requirements for the maximum width and height of the fluid container or slurry tanker normally means, that the length of the suction arm must be limited, which implies that it is often not possible to aspirate or pump from the deep manure tanks.

The length of the fourth pipe can easily be adjusted, if the fourth pipe consists of two or more telescopically in each other arranged partial lengths of pipe. Such a designed fourth pipe can easily provide the necessary length and does not occupy more space than the largest length of pipe during transport. The usage of a fourth pipe with adjustable length has the additional advantage that the suction head can be dislocated particularly easy to an advantageous height level above the fluid level in the fluid container or another desired height level.

If one of more of the valves malfunction, it can be particularly advantageously that the free end of the suction head in the position of rest, where the suction arm is not in operation, can be pivoted to exceed the fluid level in any of the first pipe, second pipe, the third pipe and the fluid container.

In order to bring the suction head to a suction position, where the suction head is immersed in the fluid the pipes of the suction arm is rotated in relation to each other by means of the articulations. Thereby, the suction arm is forcibly constrained a geometry, which should be maintained during the entire suction process, if this process has to proceed quickly and effectively.

The suction arm can advantageously be designed such that at least the first and the second articulation comprises means for fixing and retaining the first pipe and the second pipe in a given pivoting angle, in order to maintain the forcibly constrained geometry, which the suction arm has obtained after adjustment and prevent that the articulations rotate the pipes during aspiration and pumping. The articulation between the first pipe and the fluid container must during pumping carry the entire weight of the extended suction arm including its contents of fluid, which necessitates a very effective setting of the angle whereby to pipes meet in a articulation. The means for fixing the pivoting angle between two consecutive pipes serve as a countermeasure for preventing unintentional pivoting of said two pipes in an articulation. The fixation means can be e.g. hydraulic or electric actuated locking pawls, springs or other kind of stopping mechanism.

When the suction head of the suction arm comprises a pump, the suction process is not conditioned of a stationary pump being associated with the reservoir, and stationary pumps become redundant.

The suction head of the suction arm can advantageously be kept closed by e.g. a cover for preventing that the fluid or fumes from the fluid can escape via the suction head in connection with positioning of the suction head. If the suction arm for instance is filled with liquid manure, when the suction head is turned towards an opening in the floating layer on a manure tank, the cover will advantageously contribute to maintaining the fluid in the suction arm, until the pump is started.

In a preferred embodiment any of the first element, the second articulation, the third articulation or the fourth articulation can be pivotable in the clockwise and anticlockwise direction, thus enabling the suction arm easily to adopt any kind of desired geometry. Especially when the first articulation between the mobile fluid container and the first pipe can swing both clockwise and anticlockwise, the suction arm can particularly easy be swung to both sides of the mobile fluid container.

In a particularly preferred embodiment, the suction arm can be designed so that at least one of the first articulation, the second articulation, the third articulation or the fourth articulation is arranged pivotably in substantially same or parallel planes as at least one of the other articulations. The positioning of the centre of gravity of a suction arm, designed this way, is particularly easy to control, when the suction arm is dislocated to its suction position in the reservoir, which contributes to preventing the slurry tanker from tilting during the usage of the suction arm.

The liquid manure in a manure tank can be covered by a floating layer or be covered by covering in the form of a canvas, which to a large extent contributes to reducing the evaporation from the manure tank. Thus, covering and floating layer contribute to prevent the liquid manure from smelling, and it is sought to maintain the floating layer intact to the highest possible extent during emptying of the manure tank. This means that the opening, which is made in the floating layer or other covering, must be as small as possible.

The access conditions to and the design of various reservoirs can be very different, and it is not always possible to place the mobile fluid container such that it is always possible to fill from the same side of the mobile fluid container.

These problems can advantageously be corrected by the suction arm according to the present invention, as the inventive suction arm has more articulations with larger pivotability both clockwise and anticlockwise. The suction head can be navigated into position with great accuracy, and with only few pivots of the various articulations filling can be performed on both sides of the fluid container as needed.

In an advantageous embodiment the pipes of the suction arm can have a diameter of about 200 mm - 500 mm, preferably about 250 mm - 450 mm, most preferably about 300 mm - 400 mm. These pipe diameters are especially advantageous for e.g. pumping of liquid manure from a reservoir. The liquid manure contains particulate matter or larger lumps, which can easily pass if the pipe diameter considers the character of the fluid. A suction arm with a small pipe diameter is easily demounted from the fluid container and replaced by a suction arm with a larger diameter, thus already before aspiration and pumping being able to anticipate that objects in the fluid might block the pipes. Furthermore, these pipe diameters provide a pumping capacity, which allows for fast emptying of the reservoir.

The suction arm is particularly easy to navigate to and from its suction position in the reservoir, when it furthermore comprises an electronic positioning unit.

The invention will be described in more detail with reference to the accompanying drawing, where
Fig. 1 is a principle sketch, seen in a perspective view partly from the side, of a suction arm mounted on a mobile fluid container and in position of rest,
Fig. 2 is a fractional view of the second articulation shown in fig. 1 on a larger scale and in more detail, and
Fig. 3 is the suction arm shown in fig. 1 in the position of use, where the suction arm is pivoted to the other side of the mobile fluid unit.

In the following it is assumed by way of example that the mobile fluid container is a slurry tanker, that the fluid is liquid manure, and that the reservoir is a manure tank. These exemplifications are in no manner limiting to the invention, and within the scope of the present invention the fluid can be any other type of fluid, such as liquid chemicals, oil or sewage water, which has to be pumped from a container or a reservoir to another container or reservoir.

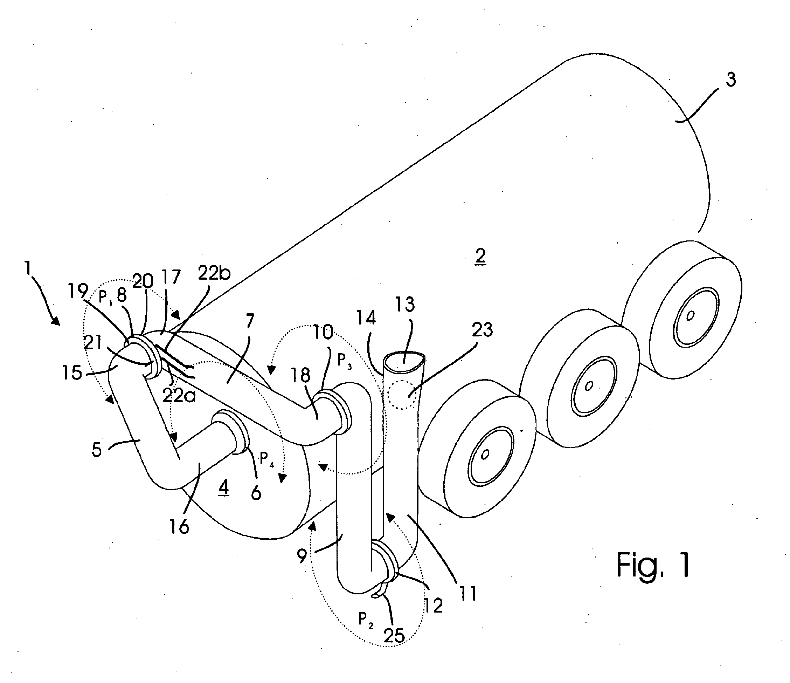

The principle sketch in fig. 1 shows, how an articulated suction arm 1 is mounted to a cylindrical fluid container 2 in the form of a slurry tanker 3.

The suction arm 1 is brought in fluid communication with the fluid container 2 of the slurry tanker 3 at one end 4 of the fluid container, but within the scope of the present invention the suction arm 1 might just as well be mounted at the other end of the fluid container or on the top of the fluid container 2. The slurry tanker 3 is a mobile fluid container and consequently has a number of wheels, whereof only three are visible in fig. 1.

The suction arm 1 consists of several pipes connected in series: a first U-shaped pipe 5, which is connected to the fluid container 2 via a first articulation 6, where the first U-shaped pipe 5 is connected to a second S-shaped pipe 7 via a second articulation 8, where the second S-shaped pipe 7 is connected to a third S-shaped pipe 9 via a third articulation 10, where the fourth pipe 11 is connected to the third pipe via a fourth articulation 12, and where the fourth pipe 11 extends from the fourth articulation 12 towards a free end part 13, which constitutes the suction head 14, and serves for immersion into the fluid in a reservoir (not shown in fig. 1), which is to be emptied.

In the resting arrangement of the suction arm, which is shown in fig. 1, the articulations are pivoted so that the fourth pipe 11 is parallel to the third pipe 9, and the suction head 14 extends to a height level, which exceeds the height level of the fourth articulation 12 above the basis upon which the slurry tanker 3 is resting.

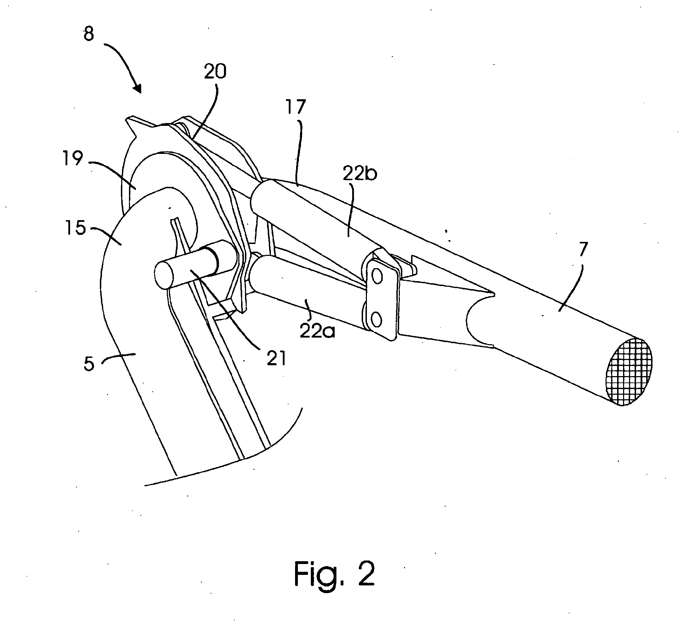

The structure and function of the articulations are described in detail with reference to fig. 2, which in enlarged scale shows a fragment of the second articulation 8 of the suction arm 1 shown in fig. 1.

The first U-shaped pipe 5 has a short leg 15, which is connected to the second pipe 7, and a longer leg 16, which is connected to the fluid container 2. The S-shaped second pipe 7 has a first bend end part 17, which is connected to the short leg 15 of the first pipe 5, and a second bend end part 18, which is connected to the third S-shaped pipe 9.

The short leg 15 of the first pipe 5 ends into a first flange or a first coupling part 19, and the first bend end part 17 of the second pipe 7 ends into a second flange or second coupling part 20, which is arranged to fluid connect the first pipe 5 and the second pipe 7 leak proof and pivotable.

The pivotability of the fluid coupling can be obtained e.g. by letting one or part of one of two adjacent coupling elements 19 extend inside or above the second, or part of the second, coupling part 20. The actual assembly can be kept leak proof by means of e.g. a packing, not shown, which apart from sealing also can produce friction, such that two pipes alone, as a result of the friction between the two coupling parts 19,20, between which the packing (not shown) is situated, are capable of fixing the two pipes in a given pivoting angle. Alternatively, the surface of the coupling parts or the surface of the pipes can be designed to exercise the necessary friction. A coupling, which is based solely on that the mutual pivoting angle of the pipes is maintained by friction, is most appropriate for light fluids. A suction arm, which is to be used for pumping heavier fluids, is provided with additional means for fixing the pivoting angle of the pipes, as described below.

Other kinds of leak proof, pivotable couplings of pipes, which are in fluid communication, will be known to a person skilled in the art, who can easily implement such a coupling in the suction arm of the present invention.

In a particularly advantageous embodiment of a suction arm according to the present invention, at least one of the first, the second, the third or the fourth articulation can comprise means for indicating and monitoring the position and angle of pivoting of the articulation, thus allowing the operation of the suction arm to be made fully automated and independent of the tilting angle of the mobile fluid container and its preliminary distance to the reservoir. Means for indicating and monitoring the position of the articulations are preferably electronic and can operational at a distance from the mobile fluid container, e.g. from the driver's cab of the pulling vehicle.

In the very simple embodiment shown in fig. 1 of a suction arm according to the present invention any of the pipes can be swung at least 180° about an axis through the articulation, which the pipe is connected to.

In most cases however, it is necessary that an articulation comprises means for fixing two coupled pipes in a desired mutual pivoting angle α.

As is seen best in fig. 2, the means for fixing the pivoting angle α between the two coupled pipes can be a locking pawl 21, which extends right through two adjacent coupling parts 19,20. The locking pawl can be inserted manually, but is optimally operated by electronic remote control unit, which can be a part of the positioning unit belonging to the suction arm.

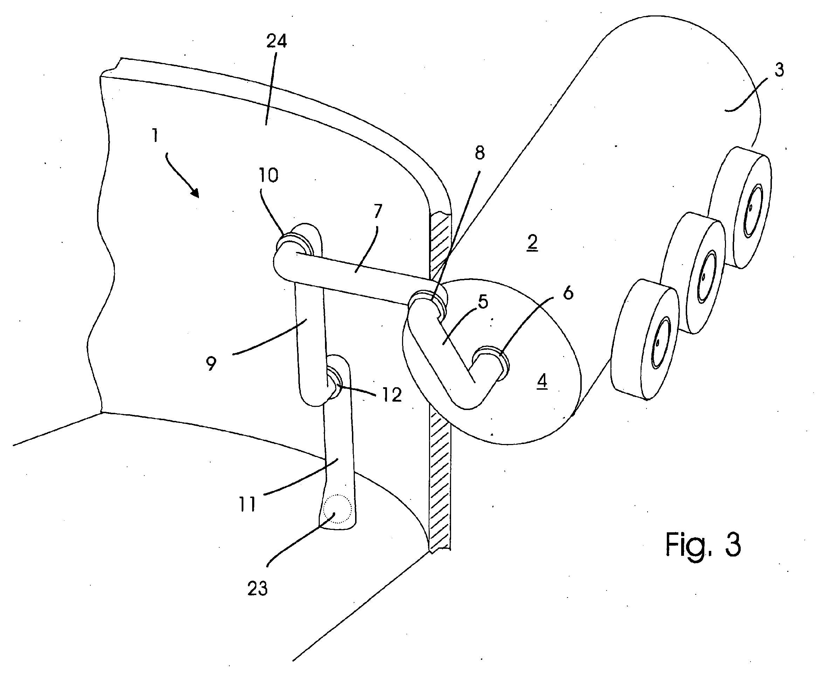

In addition, figure 2 shows two hydraulic cylinders 22a,22b by means of which the second pipe can be brought to pivot about a plane P₁ through the second articulation 8. As indicated with dotted line for the planes P, other parallel planes P₂, P₃ and P, extends through the first articulation 6, the third articulation 10 and the fourth articulation 12, respectively, which means, that when the suction arm 1 is to be pivoted towards the position of use shown in fig. 3, then all the pipes 5,7,9,11 are pivoted either one at a time, two at a time or all at the same time, in a plane which is parallel to the planes P. All the articulations can have the hydraulic cylinders, which serve to both pivot the pipes but also to maintain the pivoted pipes in a fixed angle in relation to each other.

In fig. 3 the suction arm 1 is pivoted so that it extends to the opposite side of the slurry tanker 3. The fourth pipe is pivoted 180° in the plane P₄, such that the suction head 11 is turned to the suction position. The suction head 11, which contains a pump 23, as indicated with broken line in fig. 1 and fig. 3, is immersed into a reservoir 24 in order to pump fluid (not shown). When the pumping process is completed, the fourth pipe 11 is pivoted back again to its position of rest, where the suction head 14 is placed at least above the height level of the fourth articulation 11 over the basis, whereupon the slurry tanker 3 is resting. The aspirated liquid manure is now ready to be transported to waste dump or to be used elsewhere without risk of spillage or overflow during transport.

The fourth articulation 12 has possibly as additional spillage security an outlet 25 for, before transportation, drain off and collect fluid, which might be accumulated in the fourth articulation. Additionally, one or more valves may be installed (not shown) in the suction arm for opening and closing the fluid passage.

The suction arm's great flexibility and possibility of adjusting the length of the fourth pipe and the working width of the suction head enables the suction arm to be used for aspiration of fluid while the mobile fluid unit is driving. The suction head can during the driving sweep a large area, and its suction position can if necessary be moved during driving by means of the positioning unit.

The suction arm is advantageously produced by a corrosion resistant material, such that the articulations have a long life despite the fluid being aggressive. Corrosion can occur when the suction arm is in operation but also when the suction arm is out of operation, if residues of aggressive fluid remain in the suction arm.

## Claims

1. A suction arm (1) for pumping a fluid from a reservoir (24) to a fluid container (2) and of the kind, which comprises a number of pipes (5,7,9,11) connected in series via articulations (6,8,10,12), a suction head (14) and means (21,22) for pivoting the pipes in relation to each other, where
- a first pipe (5) is connected to the fluid container (2) via a first articulation (6),
- a second pipe (7) is connected to the first pipe (5) via a second articulation (8),
- a third pipe (9) is connected to the second pipe (7) via a third articulation (12),
**characterized in that**
- the suction arm (1) comprises a fourth pipe (11), which at a free end (13) opens into the suction head (14), and at the opposite end is pivotably connected to the third pipe (9) via a fourth articulation (11) to at least a position, where the suction head (14) is in a suction position, where the suction head (14) is immersed into the fluid, and a position of rest, where the suction head (14) is pivoted to a height level, which is higher than the height level of the fourth articulation (12).

2. A suction arm (1) according to claim 1, **characterized in that** the fourth pipe (11) is pivotable between the suction position and the position of rest in an angle α of at least ± 180°.

3. A suction arm (1) according to claims 1 or 2, **characterized in that** when the suction head (14) is pivoted to a height level, which is higher than the height level of the fourth articulation the fourth pipe (11) is substantially parallel to the third pipe (9) with the suction head (14) facing substantially perpendicular to the fluid level in the fluid container (2).

4. A Suction arm (1) according to claims 1, 2 or 3, **characterized in that** at least the fourth pipe (11) has an adjustable length."

5. A suction arm (1) according to any of the preceding claims 1 - 4, **characterized in that** the suction head (14) has a free end (13), which in the position of rest exceeds the fluid level in any of the first pipe (5), second pipe (7), third pipe (9) and the fluid container (2).

6. A suction arm (1) according to any of the preceding claims 1 - 5, **characterized in that** at least the first (6) and the second articulation (8) comprise means (17;21,22) for fixing the first pipe and the second pipe in a given pivoting angle α.

7. A suction arm (1) according to any of the preceding claims 1 - 6, **characterized in that** the suction head (14) comprising a pump (23).

8. A suction arm (1) according to any of the preceding claims 1 - 7, **characterized in that** any of the first articulation (6), the second articulation (8), the third articulation (10) or the fourth articulation (12) is pivotable both clockwise and anticlockwise.

9. A suction arm (1) according to any of the preceding claims 1 - 8, **characterized in that** at least one of the first articulation (6), the second articulation (8), the third articulation (10) or the fourth articulation (12) is arranged pivotable in substantially the same parallel plane as at least one of the other articulations.

10. A suction arm (1) according to any of the preceding claims 1 - 9, **characterized in that** the suction arm (1) comprises an electronic positioning unit for navigating the suction head (14) to and from the suction position in the reservoir (24).

11. A suction arm (1) according to any of the preceding claims 1 - 10, **characterized in that** at least one of the first (6), the second (8), the third (10) or the fourth (12) articulation comprises means for indicating the position and pivoting angle of the articulation.

## Patentansprüche

1. Ein Saugarm (1) für das Pumpen von Flüssigkeit aus einem Reservoir (24) zu einem Flüssigkeitsbehälter (2) und von der Art, die eine Anzahl von Rohren (5, 7, 9, 11), die in Reihe über Gelenkverbindungen (6, 8, 10, 12) verbunden sind, einen Saugkopf (14) und Mittel (21,22) zum Verschwenken der Rohre in Relation zueinander umfasst, wobei
- ein erstes Rohr (5) über eine erste Gelenkverbindung (6) mit dem Flüssigkeitsbehälter (2) verbunden ist,
- ein zweites Rohr (7) mit der ersten Leitung (5) über eine zweite Gelenkverbindung (8) verbunden ist,
- ein drittes Rohr (9) mit dem zweiten Rohr (7) über eine dritte Gelenkverbindung (12) verbunden ist,
**dadurch gekennzeichnet, dass**
- der Absaugarm (1) ein viertes Rohr (11) umfasst, das sich an einem freien Ende (13) in den Saugkopf (14) öffnet, und am anderen Ende schwenkbar am dritten Rohr (9) über eine vierte Gelenkverbindung (11) von wenigstens einer Position, in der der Saugkopf (14) sich in einer Saug-Position befindet, in der der Saugkopf (14) in die Flüssigkeit getaucht ist, bis in eine Ruheposition, in der der Saugkopf (14) bis in ein Niveau geschwenkt ist, die höher ist als das Niveau der vierten Gelenkverbindung (12).

2. Ein Saugarm (1) nach Anspruch 1, **dadurch gekennzeichnet, dass** das vierte Rohr (11) zwischen der Saug-Position und der Ruheposition in einem Winkel α von mindestens ± 180° schwenkbar ist.

3. Ein Saugarm (1) nach Anspruch 1 oder 2, **dadurch gekennzeichnet, dass** wenn der Saugkopf (14) bis zu einem Niveau geschwenkt wird, das höher ist als das Niveau der vierten Gelenkverbindung des vierten Rohrs (11) er im Wesentlichen parallel zu dem dritten Rohr (9) wobei der Saugkopf (14), im wesentlichen senkrecht auf die Ebene der Flüssigkeit in dem Flüssigkeitsbehälter (2) steht.

4. Ein Saugarm (1) nach einem der Ansprüche 1, 2 oder 3, **dadurch gekennzeichnet, dass** zumindest das vierte Rohr (11) über eine einstellbare Länge verfügt.

5. Ein Saugarm (1) nach einem der vorhergehenden Ansprüche 1 bis 4, **dadurch gekennzeichnet, dass** der Saugkopf (14) ein freies Ende (13) aufweist, das in der Ruheposition den Flüssigkeitsstand sowohl im ersten Rohr (5), im zweiten Rohr (7), im dritten Rohr (9) und in dem Flüssigkeitsbehälter (2) übersteigt.

6. Ein Saugarm (1) nach einem der vorangehenden Ansprüche 1 bis 5, **dadurch gekennzeichnet, dass** zumindest die erste (6) und die zweite Gelenkverbindung (8) Mittel (17, 21, 22) für die Fixierung des ersten Rohrs und des zweiten Rohrs in einem bestimmten Schwenkwinkel α umfassen.

7. Ein Saugarm (1) nach einem der Ansprüche 1 bis 6, **dadurch gekennzeichnet, dass** der Saugkopf (14) mit einer Pumpe (23) versehen ist.

8. Ein Saugarm (1) nach einem der Ansprüche 1 bis 7, **dadurch gekennzeichnet, dass** eine jede, die erste Gelenkverbindung (6), die zweite Gelenkverbindung (8), die dritte Gelenkverbindung (10) oder die vierte Gelenkverbindung (12) sowohl im Uhrzeigersinn wie gegen den Uhrzeigersinn schwenkbar ist.

9. Ein Saugarm (1) nach einem der vorangehenden Ansprüche 1 bis 8, **dadurch gekennzeichnet, dass** mindestens eines, die erste Gelenkverbindung (6), die zweite Gelenkverbindung (8), die dritte Gelenkverbindung (10) oder die vierte Gelenkverbindung (12) schwenkbar angeordnet sind, im wesentlichen in der gleichen parallelen Ebene wie mindestens eine der anderen Gelenkverbindungen.

10. Ein Saugarm (1) nach einem der Ansprüche 1 bis 9, **dadurch gekennzeichnet, dass** der Saug-Arm (1) mit einer elektronischen Positioniereinheit für die Navigation des Saugkopf (14) zu und von der Saug-Position in dem Reservoir ( 24) versehen ist.

11. Ein Saugarm (1) nach einem der Ansprüche 1 bis 10, **dadurch gekennzeichnet, dass** mindestens eine, die erste (6), die zweite (8), die dritte (10) oder die vierte (12) Gelenkverbindung mit Mitteln für die Angabe von Lage und Schwenkwinkel der Anlenkung versehen sind.

## Revendications

1. Bras d'aspiration (1) pour pomper un fluide d'un réservoir (24) à un conteneur de fluide (2) et du type, qui comprend un nombre de tuyaux (5,7,9,11) connectés en série via articulations (6,8,10,12), un bras d'aspiration (14) et moyens (21,22) pour pivoter les tuyaux l'un par rapport à l'autre, où
- un premier tuyau (5) est connecté au conteneur de fluide (2) via une première articulation (6),
- un deuxième tuyau (7) est connecté au premier tuyau (5) via une deuxième articulation (8),
- un troisième tuyau (9) est connecté au deuxième tuyau (7) via une troisième articulation (12)
**caractérisée en ce que**
- le bras d'aspiration comprend un quatrième tuyau (11), qui à une extrémité libre (13) ouvre vers la hauteur d'aspiration (14), et à l'extrémité opposé est connecté de manière pivotante au troisième tuyau (9) via une quatrième articulation (11) à au moins une position, où la hauteur d'aspiration (14) est dans une position d'aspiration, où la hauteur d'aspiration (14 est immergé dans le fluide, et une position de repos, où la hauteur d'aspiration (14) est pivotée à un niveau de hauteur, qui est plus haut que le niveau d'hauteur du quatrième articulation (12).

2. Bras d'aspiration (1) selon la revendication 1, **caractérisée en ce que** le quatrième tuyau (11) est pivotant entre la position d'aspiration et la position de repos dans un angle α d'au moins ± 180°.

3. Bras d'aspiration (1) selon les revendications 1 ou 2, **caractérisée en ce que**, quand la hauteur d'aspiration (14) est pivoté à un niveau d'hauteur, qui est plus elevé que le niveau d'hauteur du quatrième articulation le quatrième tuyau (11) est substantiellement parallel au troisième tuyau (9) avec la hauteur d'aspiration (14) située face au niveau de fluide substantiellement perpendiculaire dans le conteneur de fluide (2).

4. Bras d'aspiration (1) selon les revendications 1, 2 ou 3, **caractérisée en ce qu'**au moins le quatrième tuyau (11) a un longueur réglable.

5. Bras d'aspiration (1) selon l'une quelconque des revendications 1 à 4 précédantes, **caractérisée en ce que** la hauteur d'aspiration (14) a une extrémité libre (13), qui dans la position de repos excède le niveau de fluide dans une quelconque du premier tuyau (5), deuxième tuyau (7), troisième tuyau (9) et le conteneur de fluide (2).

6. Bras d'aspiration (1) selon une quelconque des revendications precédantes 1 à 5, **caractérisée en ce qu'**au moins le premier (6) et le deuxième articulation (8) comprend des moyens (17;21,22) pour fixage du premier tuyau et du second tuyau dans un angle pivotant donné α.

7. Bras d'aspiration (1) selon une quelconque des revendications precédantes 1 à 6, **caractérisée en ce que** la hauteur d'aspiration (14) comprend une pompe (23).

8. Bras d'aspiration (1) selon une quelconque des revendications précédantes 1 à 7, **caractérisée en ce que** l'une quelconque de la première articulation (6), de la deuxième articulation (8), de la troisième articulation (10) ou de la quatrième articulation (12) est pivotable dans le sens horaire et en sens inverse d'horloge.

9. Bras d'aspiration (1) selon une quelconque des revendications précédantes 1 à 8, **caractérisée en ce qu'**au moins une de la première articulation (6), de la deuxième articulation (8), de la troisième articulation (10) ou la quatrième articulation (12) est arrangé de manière pivotable substantiellement dans le même plan parallel comme au moins une des autres articulations.

10. Bras d'aspiration (1) selon une des revendications précédantes 1 à 9, **caractérisée en ce que** le bras d'aspiration (1) comprend une unité de positionnement électronique pour naviguer la hauteur d'aspiration (14) à la et de la position d'aspiration dans le réservoir (24).

11. Bras d'aspiration (1) selon une quelconque des revendications précédantes 1 à 10, **caractérisée en ce qu'**au moins une de la première (6), de la deuxième (8), de la troisième (10) ou de la quatrième (12) articulation comprend des moyens pour indiquer la position et l'angle pivotant de l'articulation.
